# EUROPÄISCHE PATENTSCHRIFT

(11) **EP 0 425 619 B1**
(45) Veröffentlichungstag und Bekanntmachung des Hinweises auf die Patenterteilung: **07.07.1993**
(21) Anmeldenummer: 90906843.9
(22) Anmeldetag: 15.05.1990
(51) Int. Cl.: A23L 1/30, B01D 61/14

(54) **VERFAHREN UND ANLAGE ZUR KLÄRUNG VON FLÜSSIGKEITEN, INSBESONDERE ROHSAFT**
PROCESS AND DEVICE FOR CLARIFYING LIQUIDS, IN PARTICULAR RAW JUICE
PROCEDE ET DISPOSITIF POUR PURIFIER DES LIQUIDES, EN PARTICULIER DU JUS BRUT

(30) Priorität: 18.05.1989 CH 1868/89
(43) Veröffentlichungstag der Anmeldung: 08.05.1991
(73) Patentinhaber: BUCHER-GUYER AG Maschinenfabrik, CH-8166 Niederweningen (CH)
(72) Erfinder: GRESCH, Walter, CH-8166 Niederweningen (CH)
(86) Internationale Anmeldenummer: CH9000129
(87) Internationale Veröffentlichungsnummer: WO9014018

(56) Entgegenhaltungen:
- WO-A-89/02707
- WO-A-89/02708
- WO-A-89/03240
- FR-A- 2 562 392
- GB-A- 2 091 585
- "Obst +Weinbau",18/6/88,Seite344 "Flüssiges Obst",Jg.55,Heft 11/1988,Seite 614-620

## Beschreibung

Die Erfindung betrifft ein Verfahren und eine Anlage zur Klärung von Flüssigkeiten, insbesondere Rohsaft aus Obst, Trauben, Beeren oder anderen Früchten, Gemüsen und Saaten.

Bei der Herstellung von Säften kommt es infolge der Wärmebelastung durch Klärsysteme, die warmgefahren werden, sowie durch Pasteurisierung zu Beeinträchtigungen der Saftqualität. Zur Vermeidung dieses Nachteils sind bereits konventionell aufgebaute Mikro- oder Ultrafiltrations-Anlagen im Betrieb, die kalt bzw. bei Raumtemperaturen gefahren werden, wie es in der Zeitschrift "Flüssiges Obst", Jg.55, Heft 11/1988, Seite 614-620 beschrieben ist. Es ist auch ein Verfahren dieser Art bekannt, bei dem der Rohsaft zunächst kaltgepresst, dann mittels einer Mikrofiltrations-Anlage geklärt und schliesslich kaltsteril, d.h., ohne Pasteurisierung abgefüllt wird. Da bei der Klärung durch Mikrofiltra-tion praktisch alle Hefen und Bakterien zurückgehalten werden, verlässt der Saft die Mikrofiltrationsanlge weitgehend steril. Für die anschliessende kaltsterile Abfüllung genügt somit ein Durchlauf durch einen Sicherheits-ntkeimungsfilter, dessen Standzeit sehr hoch ist. Der so hergestellte Saft zeichnet sich durch eine sehr hohe Qualität bezüglich Geschmack und Aroma aus.

Zur weiteren Verbesserung der Saftqualität ist es bekannt, vor der Mikrofiltration eine Einrichtung zum Kaltschönen anzuordnen, vergleiche Zeitschrift Obst+Weinbau, 18.06.1988, Seite 344. Bei anderen, bekannten Anlagen erfolgt die Vorschönung durch Gelatine/Betonit vor der Filtration mittels Drehfilter und Mikrofiltration.

Seit langem bekannt ist auch die Herstellung von Kaltmost ohne Querstromfiltration. Dabei wird der Rohsaft konventionell geschönt und der Schönungstrub zusammen mit dem übrigen Trub beispielsweise durch Zentrifugen entfernt. Danach wird der Saft, z.B. mittels Schichtenfilter, weitergeklärt und durch Entkeimungsfilter kaltsteril gemacht.

Diese bekannten Verfahren der kaltsterilen Klärung haben sich gegenüber den Warmklärverfahren, die bei ca. 50 - 55 ° C arbeiten, nur wenig durchgesetzt. Der Grund hierfür ist, dass der Flux, d.h., die Filtrationsleistung pro Flächeneinheit im allgemeinen beim Kaltklärverfahren weniger als halb so gross ist wie beim Warmverfahren. Dies führt zu einer massiven Erhöhung der Investions-und Betriebskosten aufgrund von Mehrkosten für Membranersatz, Energieverbrauch und Reinigungsmittel für Membranen. Ausserdem ist wegen der vorhandenen Aktivität safteigener Enzyme, die beim Kaltverfahren nicht durch Erhitzung entaktiviert werden dürfen, zur Erzielung einer genügend hohen Saft-Stabilität in vielen Fällen eine Vorschönung, verbunden mit einer Entfernung des entstehenden Schönungstrubes, vor der Weiterverarbeitung mittels Querstromfiltration erforderlich. Die wirtschaftliche Entfernung des Schönungstrubes, d.h., ohne grosse Ausbeuteverluste, erfordert zusätzliche hohe Investionen verbunden mit weiteren Betriebskosten, beispielsweise durch Verwendung eines Vakuum-Drehfilters etc.

Um einen deutlichen qualitativen Vorsprung des Kaltsaftes gegenüber dem im Warmverfahren hergestellten Massensaft zu erzielen, sollten lange Verweilzeiten im Verfahren vermieden werden. Die hierzu erforderlichen kontinuierlichen Filtrations-Systeme, insbesondere Querstromfiltration, sind aber sehr konstenintensiv und verteuern somit das Kalt-Klärverfahren noch mehr.

Auch die Herstellung von Kaltsaft mittels konventioneller Klärung, d.h., ohne Querstromfiltration, ist relativ teuer. Durch die konventionellen Filtrationsmethoden werden vor der Entkeimungsfiltration noch zu wenig mikrobiologische Keime entfernt. Dadurch entsteht eine starke Belastung des Entkeimungsfilters am Ende des Prozesses. Dies führt zu einem grossen Verschleiss der statisch arbeitenden Entkeimungsfilter und somit zu einer Erhöhung der Kosten. Daneben müssen mit den-eingesetzten Trennverfahren hohe Ausbeuten erzielt werden, um auf eine gute Wirtschaftlichkeit zu kommen. Das setzt zum Teil relativ teure Einrichtungen und hohe Betriebskosten voraus.

Der Erfindung liegt die Aufgabe zugrunde, ein Verfahren und eine Anlage der eingangs erwähnten Art zu schaffen, das die Qualitätsvorteile des Kalt-Klärverfahrens und die Kostenvorteile des Warm-Klärverfahrens in sich vereinigt.

Gemäss der Erfindung wird diese Aufgabe dadurch gelöst, dass der Rohsaft in einem oder mehreren Kalt-Klärsystemen geklärt wird und die Rückstände aus dem Kalt-Klärsystem mindestens einem weiteren, mit dem Kalt-Klärsystem betriebsverbundenen Klärsystem zugeführt werden, das warm gefahren wird.

Dieses Verfahren lässt sich mit Vorteil so ausführen, dass das Kalt-Klärsystem zur Herstellung von hochwertigerem, mindestens kaltgefiltertem Saft und das Klärsystem, das warm gefahren wird, zur Herstellung von Massensaft, Niedrig-Kosten-Saft sowie Konzentrat, hergestellt aus diesen Säften, dient. Insbesondere kann das Kalt-Klärsystem zur Herstellung von Kalt-Most dienen. Zweckmässig wird für das Kalt-Klärsystem ein qualitativ hochwertigerer Rohsaft verwendet als für das Klärsystem, das warmgefahren wird. Dieser qualitativ hochwertigere Rohsaft kann gegenüber dem Rohsaft für das warm-gefahrene Klärsystem aus andersartigem, hochwertigerem Rohmaterial bestehen. So stammt der Rohsaft für das warm-gefahrene Klärsystem zweckmässig aus Obst und das hochwertigere Rohmaterial aus anderen Früchten, Trauben, Beeren.

Das Rohmaterial wird vor der Zuführung zum Kalt-Klärsystem grob vorzentrifugiert. Bei einer vorteilhaften Ausführungsform wird das Retentat der kalt gefahrenen Querstromfiltrationsanlage in die Retentatseite der warm gefahrenen Querstromfiltrationsanlage des Klärsystems eingeleitet. Der mit Trub angereicherte, von einer Trubabtrennungseinrichtung abgetrennte Saft wird zweckmässig in die Retentatseite der warm gefahrenen Querstromfiltrationsanlage des Klärsystems eingeleitet. Gemäss einer weiteren Ausführungsform wird die warm gefahrene Querstromfiltrationsanlage des Klärsystems im Batch-, Semi-Batch-Verfahren oder vollkontinuierlich betrieben. Die kalt gefahrene Querstromfiltrationsanlage des Kalt-Klärsystems wird hingegen zweckmässig kontinuierlich betrieben, insbesondere als 1-stufige, kontinuierliche Anlage.

Eine Anlage zur erfindungsgemässen Klärung von Flüssigkeiten, insbesondere Rohsaft aus Obst, Trauben, Beeren oder anderen Früchten, Gemüsen oder Saaten, zeichnet sich aus durch eines oder mehrere Kalt-Klärsysteme zur Klärung des Rohsaftes, welche ein kalt gefahrenes Filtrationssystem umfassen, und durch mindestens ein weiteres, mit dem Kalt- Klärsystem zumindest zeitweise betriebsverbundenes Klärsystem, das zumindest für die Filtration warm gefahren wird, und dem die Rückstände aus dem Kalt- Klärsystem zugeführt werden. Dabei enthält das Kalt-Klärsystem und/ oder das Klärsystem, das warm gefahren wird, mindestens eine Querstromfiltrationsanlage. Zweckmässig ist der kalt gefahrenen Querstromfiltrationsanlage eine Einrichtung zur Kalt-Entpektinisierung und Vorschönung vorgeschaltet, und zwischen der Einrichtung zur Kalt-Entpektinisierung und Vorschönung und der kalt gefahrenen Querstromfiltrationsanlage ist eine Trubabtrennungseinrichtung angeordnet.

Die Trubabtrennungseinrichtung besteht aus Dekantier-Tank und/oder niedertouriger Zentrifuge und/oder Querstrom-Grobfilter und/oder Siebkorb- Schleuder- Einrichtung. Mit Vorteil besteht die kalt gefahrene Querstromfiltrationsanlage des Kalt-Klärsystems aus Dünnkanal-Modul-Systemen, wobei der Kapillardurchmesser bei Verwendung von Kapillar-Modulen bzw. die Spaltweite bei Platten- oder Wickelmodulen kleiner als 3 mm ist. Die Dünnkanal-Module sind dann als Wickel-, Platten- oder Kapillar-Module ausgebildet. Hingegen besteht die warm gefahrene Querstromfiltrationsanlage des Klärsystems aus grosskanaligen Modul-Systemen, wobei die Spaltbreite bei der Verwendung von Platten-Modulen bzw. der Rohrdurchmesser bei Rohr-Modulen grösser als 3 mm ist. Zweckmässig ist dabei das grosskanalige Modul als Rohrmodul ausgebildet.

Bei den genannten Ausführungsformen der Anlage werden für die warm gefahrene Querstromfiltrationsanlage des Klärsystems, sowie für die kalt gefahrene Querstromfiltrationsanlage des Kalt-Klärsystems Ultrafiltrations-oder Mikrofiltrations-Membranen eingesetzt.

Mit dem erfindungsgemässen Verfahren lassen sich trotz den erhöhten Anforderungen, die im Zusammenhang mit der Herstellung von Kaltsaft gestellt werden, wesentlich einfachere und billigere Klärverfahren bei der Kaltsaft-Klärung einsetzen, so dass die Wirtschaftlichkeit der Kaltklärung erheblich verbessert wird. Dadurch, dass die Rückstände aus den Kalt-Klärsystemen an die warm gefahrenen Massensaft-Klärsysteme abgegeben werden, ist auch bei relativ hohen Mengen an Rückständen und bei einer relativ geringen Ausbeute der billigen Kaltklärverfahren noch eine hohe Gesamtausbeute und Gesamtwirtschaftlichkeit gewährleistet.

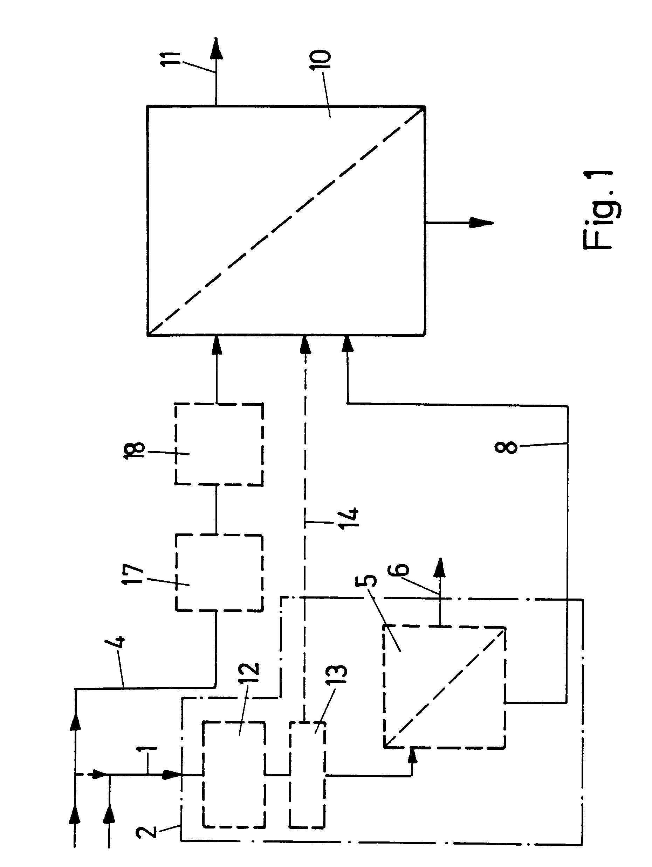

Die Erfindung ist in der folgenden Beschreibung und der Zeichnung, die mehrere Ausführungsbeispiele darstellt, näher erläutert. Es zeigen
- Fig. 1: eine schematische Darstellung des erfindungsgemässen Verfahrens,

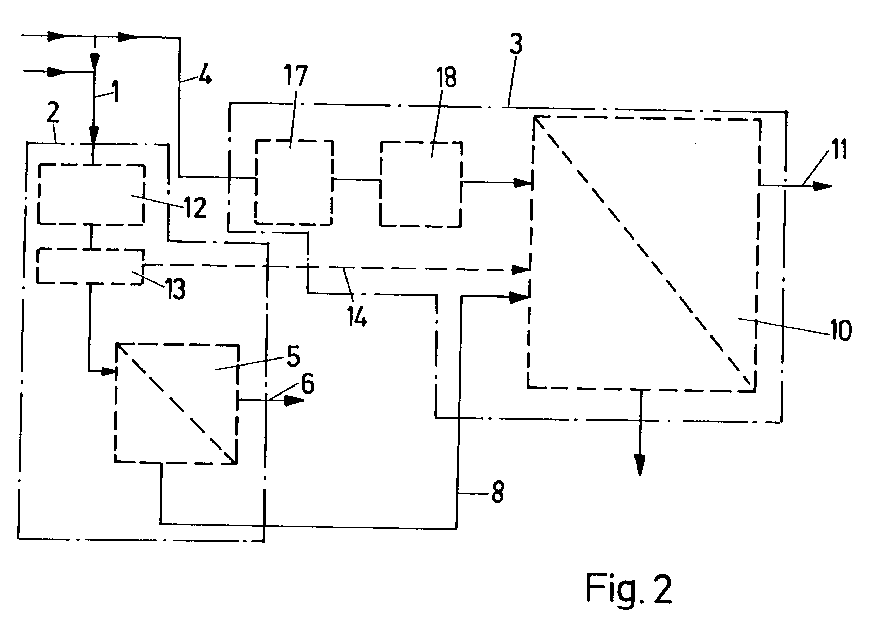

- Fig. 2: eine schematische Darstellung des erfindungsgemässen Verfahrens mit einer mindestens teilweise warm gefahrenen Saftklärung und
- Fig. 3: ein schematische Darstellung einer beispielsweisen Anlage zur Durchführung des erfindungsgemässen Verfahrens.

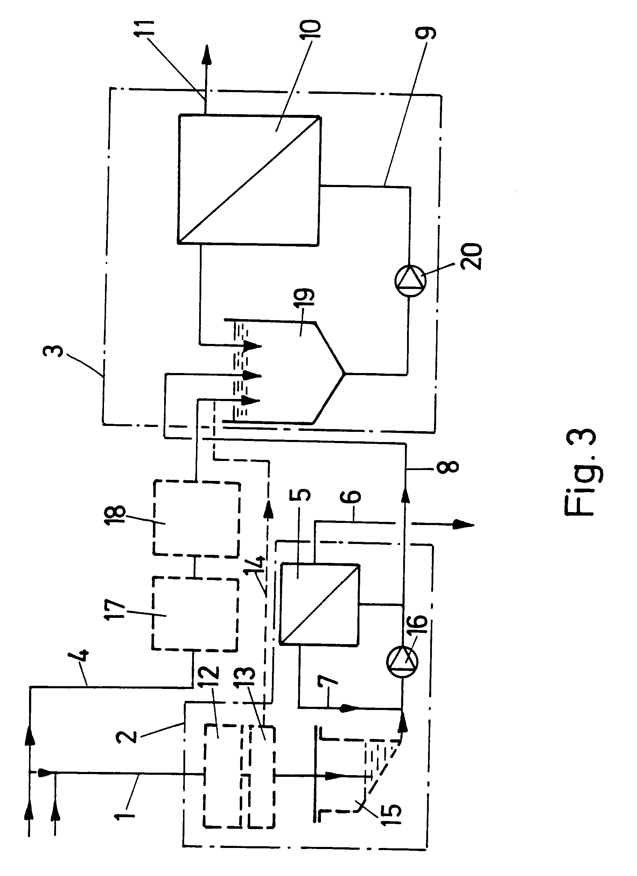

In der Anlage (Fig. 3) zur Durchführung des Verfahrens wird über eine Leitung 1 vorzugsweise ein qualitativ hochwertiger Rohsaft einem Kalt-Klärsystem 2 zugeführt. Es handelt sich dabei um Rohsaft, der nur aus gewissen Sorten von Obst, Trauben, Beeren oder anderen Früchten, Gemüsen oder Saaten mit einem optimalen Reifezustand und wenig fauler Ware gewonnen wird. Das Kalt-Klärsystem 2 wird im Verbund mit einem weiteren Klärsystem 3, das warm gefahren wird, betrieben. Dem Klärsystem 3 wird im Vergleich zum Kalt-Klärsystem 2 Rohsaft von geringerer Qualität über eine Leitung 4 zugeführt. Es können ein oder mehrere Kalt-Klärsysteme 2 mit einem oder mehreren Klärsystemen 3 betriebsverbunden sein. Während das warm gefahrene Klärsystem 3 der Herstellung von Saft in grösseren Mengen dient, z.B. Massensaft, Niederig- Kosten-Saft, insbesondere für die Konzentratherstellung, wird im Kalt-Klärsystem 2 hochwertigerer Kalt- Saft als Spezial- Saft in eher relativ kleinen Mengen hergestellt.

Da die Mengen insbesondere bei der Herstellung von Kalt-Spezialsäften, z.B. aus Beeren, relativ klein sind, lassen sich solche Rückstände auch-in das Warm-Klärsystem für andersartiges Rohmaterial, z.B. Obstsäfte, einleiten. Hierbei kann es sich auch um Klärung von z.B. rückverdünntem Apfelsaft handeln, falls nicht entsprechende Ernten zusammenfallen. Wegen der hohen Rohmaterialkosten ist eine hohe Ausbeute bei Spezial-Säften besonders wichtig.

In gewissen Fällen, wo vorwiegend Spezial-Säfte hergestellt werden, kann das Warm-Klärsystem auch vorwiegend der Absicht dienen, die Rückstände aus dem Kalt-Klärsystem mittels einem Billig-Nebenprodukt ertragsträchtig zu verwerten.

Das Kalt-Klärsystem 2 besteht aus einer kalt gefahrenen Querstromfiltrationsanlage 5, von deren Permeatseite der Kalt-Saft durch eine Leitung 6 abgeführt wird. Vom Retentatkreislauf 7 der Querstromfiltrationsanlage 5 ist eine Leitung 8 abgezweigt, über die ein Teil des Retentats dem Retentatkreislauf 9 einer warm gefahrenen Querstromfiltrationsanlage 10 des Klärsystems 3 zugeführt wird. Ueber eine Leitung 11 wird das Permeat der Querstromfiltrationsanlage 10 als Massensaft an eine nicht dargestellte Konzentrat-Anlage abgeführt. Innerhalb des Kalt-Klärsystems 2 können eine oder mehrere kalt gefahrene Querstromfiltrationsanlagen 5 und innerhalb des Klärsystems 3 eine oder mehrere warm gefahrene Querstromfiltrationsanlagen 10 angeordnet sein.

Der Querstromfiltrationsanlage 5 des Kalt-Klärsystems 2 ist eine Einrichtung 12 zur vorzugsweise Kalt-Entpektinisierung und Kalt-Vorschönung mittels Gelatine und Betonit vorgeschaltet. Zur Abtrennung des Schönungstrubes aus der Enpektinisierung und Vorschönung ist zwischen der Einrichtung 12 und der Querstromfiltrationseinrichtung 5 eine Trubabtrenneinrichtung 13 angeordnet. Ueber eine Leitung 14 wird der abgetrennte, mit Schönungstrub abgereicherte Saft von der Trubabtrennungseinrichtung 13 zum Retentatkreislauf 9 der warm gefahrenen Querstromfiltrationsanlage 10 geführt. Im Hinblick auf die dadurch erhöhte Gesamtausbeute ist in der Trubabtrennungseinrichtung 13 keine hohe Ausbeute erforderlich. Deshalb genügen hier einfache und billige Trenneinrichtungen, wie z.B. Dekantier-Tank, niedertourige Zentrifuge mit niedriger Trennwirkung, Querstrom-Grobfilter, Siebkorb-Schleuder-Einrichtung etc.

Bei relativ hohem Trubgehalt beim Rohmaterial für das Kalt- Klärsystem 2 ist es auch sinnvoll, das Rohmaterial vor der Zuführung zum Kalt-Klärsystem 2 grob vorzuzentrifugieren. Bei relativ geringer Zentrifugenausbeute aufgrund der Wahl einer billigen Zentrifugiereinrichtung, lässt sich der Rückstand ebenfalls im Klärsystem 3 weiter verwerten.

In gewissen Fällen genügt es zur Herstellung von Kaltsaft, wenn nur die kalt gefahrene Querstromfiltrationsanlage 5 zusammen mit einer Entpektinisierung betrieben wird.

Der entpektinisierte und vom Trub befreite Rohsaft wird in einen Sammelbehälter 15 geleitet und normalerweise bei Raumtemperatur oder mit einer Temperatur von beispielsweise 15 - 30 C dem Retentatkreislauf 7 der Querstromfiltrationsanlage 5 zugeführt. Für die Umwälzung im Retentatkreislauf 7 sorgt eine Umwälzpumpe 16, die gleichzeitig einen Teil des Retentats über die Leitung 8 in den Retentatkreislauf 9 der warm gefahrenen Querstromfiltrationsanlage 10 des Klärsystems 3 fördert.

Die Einleitung der Rückstände aus dem Kalt-Klärsystem 2, wie z.B. Zentrifugenrückstand aus der Vorzentrifugierung, Trub aus Schönungsverfahren, sowie das Retentat aus der kalt gefahrenen Querstromfiltration in das Warm-Klärsystem 3, kann entweder kontinuierlich oder absatzweise erfolgen.

Aufgrund der Vorschönung in der Einrichtung 12 mit nachfolgender, mindestens teilweiser Abtrennung der grösseren Trubbestandteile ist es möglich, dass für die kalt gefahrene Querstromfiltrationseinrichtung 5 billige Dünnkanal-Modul-Systeme eingesetzt werden. Es können Kapillar- Module mit einem Kapillar-Durchmesser von < 3 mm oder Platten- und Wickel-Module mit einer Spaltweite von ebenfalls < 3 mm verwendet werden. Damit lässt sich eine massive Verbilligung der Kalt-Klärung erreichen.

Die kalt gefahrene Querstromfiltrationsanlage 5 kann je nach Vorschönung mit Mikrofiltrations- oder Ultrafiltrations-Membranen bestückt werden.

Um ein Höchstmass an Qualität zu erzielen, ist als Betriebsart für die kalt gefahrene Querstromfiltrationsanlage 5 dem kontinuierlichen Betrieb der Vorzug zu geben, da bei der Kaltmost-Klärung eine möglichst kurze Verweilzeit die Qualität weiter verbessert. Dadurch wird zumindest annähernd die Qualität des sogenannten "Trotten-Mostes " erreicht. Kontinuierliche Systeme sind allerdings im allgemeinen sehr teuer. Da aber infolge der Kombination von Kalt- und Warm-Klärsystem keine hohe Ausbeute erforderlich ist, kann hier mit nur einer 1-stufigen statt 3- bis 4-stufigen kontinuierlichen Anlage gearbeitet werden. Dies führt wiederum zu einer erheblichen Verbilligung trotz höchster Qualität.

Der warm gefahrenen Querstromfiltrationsanlage 10 des Klärsystems 3 ist zur Erzielung einer hohen Leistung und Stabilisation wie üblich eine Aroma-Rückgewinnungsanlage 17 und eine Warm-Entpektinisierungseinrichtung 18 vorgeschaltet. Der auf diese Weise vorbehandelte Rohsaft wird bei semikontinuierlichem Betrieb in einen Sammelbehälter 19 eingeleitet, der im Retentatkreislauf 9 der warm gefahrenen Querstromfiltrationsanlage 10 angeordnet ist. Im Sammelbehälter 19, dem auch die Rückstände aus dem Kalt-Klärsystem 2 über die Leitungen 14 und 8 zugeführt werden, wird der Saft wie üblich auf einer Temperatur von 45 - 60 C gehalten und mit Hilfe einer Umwälzpumpe 20 in die Retentatseite der Querstromfiltrationsanlage 10 gefördert. Die Rückstände aus dem Kalt-Klärsystem 2 können auch direkt in die Retentatleitung 9 eingeführt werden.

Für die warm gefahrene Querstromfiltrationsanlage 10 werden vorzugsweise grosskanalige Modulsysteme eingesetzt. So können z.B. Plattenmodule mit einer Spaltbreite von > 3 mm und z.B. Rohrmodule mit einem Rohrdurchmesser von ebenfalls > 3 mm verwendet werden. Dadurch wird trotz der zusätzlichen Trubbelastung aus dem Kalt-Klärsystem 2 noch eine hohe Gesamtausbeute erzielt. Ausserdem ist es vorteilhaft, für die Querstromfiltrationsanlage 10 vorzugsweise Ultrafiltrations- oder Mikrofiltrations-Membranen einzusetzen. Die warm gefahrene Quersromfiltrationsanlage 10 kann je nach Umständen, respektive Anlagegrösse, im Batch-, Semi-Batch- oder auch im vollkontinuierlichen Verfahren betrieben werden.

## Patentansprüche

1. Verfahren zur Klärung von Flüssigkeiten, insbesondere Rohsaft aus Obst, Trauben, Beeren oder anderen Früchten, Gemüsen oder Saaten, **dadurch gekennzeichnet**, dass der Rohsaft in einem oder mehreren Kalt-Klärsystemen (2) geklärt wird, wobei zumindest die Filtration kalt gefahren wird, und dass die Rückstände aus dem Kalt-Klärsystem (2) mindestens einem weiteren, mit dem Kalt-Klärsystem (2) zumindest zeitweise betriebsverbundenen Klärsystem (3) zugeführt werden, das zumindest für die Filtration warm gefahren wird.

2. Verfahren nach Anspruch 1, **dadurch gekennzeichnet**, dass das Kalt-Klärsystem (2) zur Herstellung von hochwertigerem, mindestens kaltgefiltertem Saft und das Klärsystem (3), das warm gefahren wird, zur Herstellung von Massensaft, Niedrig-Kosten-Saft sowie Konzentrat, hergestellt aus diesen Säften, dient.

3. Verfahren nach Anspruch 1 oder 2, **dadurch gekennzeichnet**, dass das Kalt-Klärsystem (2) zur Herstellung von Kalt-Most dient.

4. Verfahren nach einem der Ansprüche 1 bis 3, **dadurch gekennzeichnet**, dass für das Kalt-Klärsystem (2) ein qualitativ hochwertigerer Rohsaft verwendet wird als für das Klärsystem (3), das warmgefahren wird.

5. Verfahren nach Anspruch 4, **dadurch gekennzeichnet**, dass der qualitativ hochwertigere Rohsaft gegenüber dem Rohsaft für das Klärsystem (3) aus andersartigem, hochwertigerem Rohmaterial besteht.

6. Verfahren nach Anspruch 4 oder 5, **dadurch gekennzeichnet**, dass der Rohsaft für das Klärsystem (3) aus Obst und das hochwertigere Rohmaterial aus anderen Früchten, Trauben, Beeren stammt.

7. Verfahren nach einem der Ansprüche 1 bis 6, **dadurch gekennzeichnet**, dass das Rohmaterial vor der Zuführung zum Kalt-Klärsystem (2) grob vorzentrifugiert wird.

8. Verfahren nach einem der Ansprüche 1 bis 7, **dadurch gekennzeichnet**, dass das Retentat der kalt gefahrenen Querstromfiltrationsanlage (5) in die Retentatseite der warm gefahrenen Querstromfiltrationsanlage (10) des Klärsystems (3) eingeleitet wird.

9. Verfahren nach einem der Ansprüche 1 bis 8, **dadurch gekennzeichnet**, dass der mit Trub angereicherte, von einer Trubabtrennungseinrichtung (13) abgetrennte Saft in die Retentatseite der warm gefahrenen Querstromfiltrationsanlage (10) des Klärsystems (3) eingeleitet wird.

10. Verfahren nach einem der Ansprüche 1 bis 9, **dadurch gekennzeichnet**, dass die warm gefahrene Querstromfiltrationsanlage (10) des Klärsystems (3) im Batch-, Semi-Batch-Verfahren oder vollkontinuierlich betrieben wird.

11. Verfahren nach einem der Ansprüche 1 bis 10, **dadurch gekennzeichnet**, dass die kalt gefahrene Querstromfiltrationsanlage (5) des Kalt-Klärsystems (2) kontinuierlich betrieben wird.

12. Verfahren nach Anspruch 11, **dadurch gekennzeichnet**, dass die Querstromfiltrationsanlage (5) als 1-stufige, kontinuierliche Anlage betrieben wird.

13. Anlage zur Klärung von Flüssigkeiten, insbesondere Rohsaft aus Obst, Trauben, Beeren oder anderen Früchten, Gemüsen oder Saaten, **gekennzeichnet** durch eines oder mehrere Kalt- Klärsysteme (2) zur Klärung des Rohsaftes, welche ein kalt gefahrenes Filtrationssystem (5) umfassen, und durch mindestens ein weiteres, mit dem Kalt- Klärsystem (2) zumindest zeitweise betriebsverbundenes Klärsystem (3), das zumindest für die Filtration warm gefahren wird, und dem die Rückstände aus dem Kalt- Klärsystem (2) zugeführt werden.

14. Anlage nach Anspruch 13, **dadurch gekennzeichnet**, dass das Kalt-Klärsystem (2) und/ oder das Klärsystem (3), das warm gefahren wird, mindestens eine Querstromfiltrationsanlage (5) bzw. (10) enthält.

15. Anlage nach einem der Ansprüche 13 bis 14, **dadurch gekennzeichnet**, dass der kalt gefahrenen Querstromfiltrationsanlage (5) eine Einrichtung (12) zur Kalt-entpektinisierung und Vorschönung vorgeschaltet ist.

16. Anlage nach einem der Ansprüche 13 bis 15, **dadurch gekennzeichnet**, dass zwischen der Einrichtung (12) zur Kalt-entpektinisierung und Vorschönung und der kalt gefahrenen Querstromfiltrationsanlage (5) eine Trubabtrennungseinrichtung (13) angeordnet ist.

17. Anlage nach Anspruch 16, **dadurch gekennzeichnet,** dass die Trubabtrennungseinrichtung (13) aus Dekantier-Tank und/oder niedertouriger Zentrifuge und/ oder Querstrom-Grobfilter und/oder Siebkorb- Schleuder- Einrichtung besteht.

18. Anlage nach einem der Ansprüche 13 bis 17, **dadurch gekennzeichnet**, dass die kalt gefahrene Querstromfiltrationsanlage (5) des Kalt-Klärsystems (2) aus Dünnkanal-Modul-Systemen besteht, wobei der Kapillardurchmesser bei Verwendung von Kapillar-Modulen bzw. die Spaltweite bei Platten- oder Wickelmodulen kleiner als 3 mm ist.

19. Anlage nach Anspruch 18, **dadurch gekennzeichnet**, dass die Dünnkanal-Module als Wickel-, Platten- oder Kapillar-Module ausgebildet sind.

20. Anlage nach einem der Ansprüche 13 bis 19, **dadurch gekennzeichnet**, dass die warm gefahrene Querstromfiltrationsanlage (10) des Klärsystems (3) aus grosskanaligen Modul-Systemen besteht, wobei die Spaltbreite bei der Verwendung von Platten-Modulen bzw. der Rohrdurchmesser bei Rohr-Modulen grösser als 3 mm ist.

21. Anlage nach,Anspruch 20, **dadurch gekennzeichnet**, dass das grosskanalige Modul als Rohrmodul ausgebildet ist.

22. Anlage nach einem der Ansprüche 13 bis 21, **dadurch gekennzeichnet**, dass für die warm gefahrene Querstromfiltrationsanlage (10) des Klärsystems (3) Ultrafiltrations- oder Mikrofiltrations-Membranen eingesetzt werden.

23. Anlage nach einem der Ansprüche 13 bis 22, **dadurch gekennzeichnet**, dass für die kalt gefahrene Querstromfiltrationsanlage (5) des Kalt-Klärsystems (2) Mikro- oder Ultrafiltrations-Membranen eingesetzt werden.

## Claims

1. Process for clarifying liquids, in particular raw juice from fruit, grapes, berries or other fruits, vegetables or seeds, characterised in that the raw juice is clarified in one or more cold clarification systems (2), at least the filtration stage being performed cold, and that the residue from the cold clarification system (2) is advanced to at least one further clarification system (3) which is operatively connected at least at times to the cold clarification system (2) and is run hot at least for the filtration stage.

2. Process according to claim 1, characterised in that the cold clarification system (2) serves for the production of higher value, at least cold-filtered juice and the hot clarification system (3) serves for the production of bulk juice, low-cost juice and concentrate produced from these juices.

3. Process according to claim 1 or claim 2, characterised in that the cold clarification system (2) serves for the production of cold must.

4. Process according to one of claims 1 to 3, characterised in that the raw juice used for the cold clarification system (2) is of higher quality than the raw juice used for the hot clarification system (3).

5. Process according to claim 4, characterised in that the higher quality raw juice consists of a different high-quality raw material from that of the raw juice for the clarification system (3).

6. Process according to claim 4 or claim 5, characterised in that the raw juice for the clarification system (3) comes from fruit and the higher quality raw material comes from other fruits, grapes and berries.

7. Process according to one of claims 1 to 6, characterised in that the raw material is roughly centrifuged before being advanced to the cold clarification system (2).

8. Process according to one of claims 1 to 7, characterised in that the residue from the cold cross-flow filtration device (5) is introduced into the residue side of the hot cross-flow filtration device (10) of the clarification system (3).

9. Process according to one of claims 1 to 8, characterised in that the juice enriched with sediment and separated off by a sediment separating apparatus (13) is introduced into the residue side of the hot cross-flow filtration device (10) of the clarification system (3).

10. Process according to one of claims 1 to 9, characterised in that the hot cross-flow filtration device (10) of the clarification system (3) is operated in accordance with a batch or semi-batch process or fully continuously.

11. Process according to one of claims 1 to 10, characterised in that the cold cross-flow filtration device (5) of the cold clarification system (2) is operated continuously.

12. Process according to claim 11, characterised in that the cross-flow filtration device (5) is operated as a single-stage continuous device.

13. Device for clarifying liquids, especially raw juice from fruit, grapes, berries or other fruits, vegetables or seeds, characterised by one or more cold clarification systems (2) for clarifying the raw juice, including a cold filtration system (5), and by at least one further clarification system (3) which is operatively connected at least at times to the cold clarification system (2) and is run hot at least for the filtration stage, and to which the residue from the cold clarification system (2) is advanced.

14. Device according to claim 13, characterised in that the cold clarification system (2) and/or the hot clarification system (3) contain(s) at least one cross-flow filtration device (5) or (10).

15. Device according to one of claims 13 to 14, characterised in that an apparatus (12) for cold depectination and fining is arranged in front of the cold cross-flow filtration device (5).

16. Device according to one of claims 13 to 15, characterised in that a sediment separating apparatus (13) is arranged between the apparatus (12) for cold depectination and fining and the cold cross-flow filtration device (5).

17. Device according to claim 16, characterised in that the sediment separating apparatus (13) consists of a decantation tank and/or a low/speed centrifuge and/or a cross-flow rough filter and/or a basket centrifuge apparatus.

18. Device according to one of claims 13 to 17, characterised in that the cold cross-flow filtration device (5) of the cold clarification system (2) consists of thin-channel modular systems, the capillary diameter when using capillary modules or the gap width when using plate or coil modules being less than 3 mm.

19. Device according to claim 18, characterised in that the thin-channel modules are designed as coil, plate or capillary modules.

20. Device according to one of claims 13 to 19, characterised in that the hot cross-flow filtration device (10) of the clarification system (3) consists of large-channel modular systems, the gap width when using plate modules or the tube diameter when using tubular modules being greater than 3 mm.

21. Device according to claim 20, characterised in that the large-channel module is designed as a tubular module.

22. Device according to one of claims 11 to 21, characterised in that ultrafiltration or microfiltration membranes are used for the hot cross-flow filtration device (10) of the clarification system (3).

23. Device according to one of claims 13 to 22, characterised in that microfiltration or ultrafiltration membranes are used for the cold cross-flow filtration device (5) of the cold clarification system (2).

## Revendications

1. Procédé pour purifier des liquides, en particulier du jus brut provenant de fruits de table, de raisins, de baies ou d'autres fruits, légumes ou semences, caractérisé par le fait que le jus brut est purifié dans un ou plusieurs système(s) (2) de purification à froid, au moins la filtration s'opérant à froid ; et par le fait que les résidus provenant du système (2) de purification à froid sont dirigés vers au moins un système supplémentaire de purification (3) qui est, au moins par intermittence, en liaison interactive avec le système (2) de purification à froid et qui, au moins pour la filtration, est exploité à chaud.

2. Procédé selon la revendication 1, caractérisé par le fait que le système (2) de purification à froid sert à produire un jus de qualité supérieure, au moins filtré à froid, et le système de purification (3) qui est exploité à chaud sert à produire du jus en grand volume, du jus bon marché, ainsi que du concentré fabriqué à partir de ces jus.

3. Procédé selon la revendication 1 ou 2, caractérisé par le fait que le système (2) de purification à froid sert à produire du moût froid.

4. Procédé selon l'une des revendications 1 à 3, caractérisé par le fait qu'on utilise, pour le système (2) de purification à froid, un jus brut qualitativement supérieur à celui destiné au système de purification (3) qui est exploité à chaud.

5. Procédé selon la revendication 4, caractérisé par le fait que le jus brut qualitativement supérieur consiste, par rapport au jus brut destiné au système de purification (3), en un produit brut d'une autre nature et de qualité supérieure.

6. Procédé selon la revendication 4 ou 5, caractérisé par le fait que le jus brut destiné au système de purification (3) provient de fruits de table, et le produit brut de qualité supérieure provient d'autres fruits, raisins ou baies.

7. Procédé selon l'une des revendications 1 à 6, caractérisé par le fait que le produit brut est soumis à centrifugation préalable grossière avant d'être dirigé vers le système (2) de purification à froid.

8. Procédé selon l'une des revendications 1 à 7, caractérisé par le fait que le rétentat de l'installation de filtration (5) par circulation transversale, exploitée à froid, est introduit dans le côté rétentat de l'installation de filtration (10) par circulation transversale, exploitée à chaud, du système de purification (3).

9. Procédé selon l'une des revendications 1 à 8, caractérisé par le fait que le jus enrichi en dépôt, séparé par un dispositif (13) séparateur de dépôt, est introduit dans le côté rétentat de l'installation de filtration (10) par circulation transversale, exploitée à chaud, du système de purification (3).

10. Procédé selon l'une des revendications 1 à 9, caractérisé par le fait que l'installation de filtration (10) par circulation transversale du système de purification (3), exploitée à chaud, est mise en fonction par lots, en mode semi-continu ou en mode continu.

11. Procédé selon l'une des revendications 1 à 10, caractérisé par le fait que l'installation de filtration (5) par circulation transversale du système (2) de purification à froid, exploitée à froid, est mise en fonction en mode continu.

12. Procédé selon la revendication 11, caractérisé par le fait que l'installation de filtration (5) par circulation transversale est mise en fonction sous la forme d'une installation continue à 1 étage.

13. Dispositif pour purifier des liquides, en particulier du jus brut provenant de fruits de table, de raisins, de baies ou d'autres fruits, légumes ou semences, caractérisé par un ou plusieurs système(s) (2) de purification à froid en vue de la purification du jus brut, qui comprennent un système de filtration (5) exploité à froid, et par au moins un système supplémentaire de purification (3) qui est, au moins par intermittence, en liaison interactive avec le système (2) de purification à froid, est exploité à chaud au moins pour la filtration, et vers lequel les résidus provenant du système (2) de purification à froid sont dirigés.

14. Dispositif selon la revendication 13, caractérisé par le fait que le système (2) de purification à froid et/ou le système de purification (3) exploité à chaud renferme(nt) au moins une installation de filtration (5, respectivement 10) par circulation transversale.

15. Dispositif selon l'une des revendications 13 à 14, caractérisé par le fait que l'installation (5) de filtration par circulation transversale, qui est exploitée à froid, est précédée d'un dispositif (12) d'extraction à froid de la pectine et de clarification préalable.

16. Dispositif selon l'une des revendications 13 à 15, caractérisé par le fait qu'un dispositif (13) séparateur de dépôt est intercalé entre le dispositif (12) d'extraction à froid de la pectine et de clarification préalable, et l'installation de filtration (5) par circulation transversale qui est exploitée à froid.

17. Dispositif selon la revendication 16, caractérisé par le fait que le dispositif (13) séparateur de dépôt consiste en une cuve de décantation et/ou en une centrifugeuse à faible vitesse angulaire et/ou en un filtre grossier à flux transversal et/ou en un dispositif d'essorage à panier perforé.

18. Dispositif selon l'une des revendications 13 à 17, caractérisé par le fait que l'installation de filtration (5) par circulation transversale du système (2) de purification à froid, qui est exploitée à froid, est constituée par des systèmes modulaires à canaux minces, le diamètre de capillaires ou la largeur d'interstices, lorsqu'on utilise respectivement des modules à capillaires et des modules à plateaux ou à serpentins, étant respectivement inférieur(e) à 3 mm.

19. Dispositif selon la revendication 18, caractérisé par le fait que les modules à canaux minces sont réalisés sous la forme de modules à serpentins, à plateaux ou à capillaires.

20. Dispositif selon l'une des revendications 13 à 19, caractérisé par le fait que l'installation de filtration (10) par circulation transversale du système de purification (3), qui est exploitée à chaud, est constituée par des systèmes modulaires à gros canaux, la largeur d'interstices ou le diamètre des tubes, lorsqu'on utilise respectivement des modules à plateaux et des modules tubulaires, étant respectivement supérieur(e) à 3 mm.

21. Dispositif selon la revendication 20, caractérisé par le fait que le module à gros canaux est réalisé sous la forme d'un module tubulaire.

22. Dispositif selon l'une des revendications 13 à 21, caractérisé par le fait que des membranes d'ultrafiltration ou de microfiltration sont employées pour l'installation de filtration (10) par circulation transversale du système de purification (3), exploitée à chaud.

23. Dispositif selon l'une des revendications 13 à 22, caractérisé par le fait que des membranes d'ultrafiltration ou de microfiltration sont employées pour l'installation de filtration (5) par circulation transversale du système (2) de purification à froid, qui est exploitée à froid.
